# EUROPEAN PATENT APPLICATION

(11) **EP 1 385 223 A2**
(43) Date of publication of application: **28.01.2004**
(21) Application number: 03006797.9
(22) Date of filing: 26.03.2003
(51) Int. Cl.: H01M 8/06, H01M 8/04, C01B 3/38

(54) **Fuel cell system with anti-freezing Operation Modes**

(30) Priority: 26.03.2002 JP 2002085270
(71) Applicant: MATSUSHITA ELECTRIC INDUSTRIAL CO., LTD., Kadoma-shi, Osaka 571-8501 (JP)
(72) Inventor: Ueda, Tetsuya, Kasugai-shi, Aichi 487-0032 (JP); Miyauchi, Shinji, Shiki-gun, Nara 636-0311 (JP); Ozeki, Masataka, Izumi-shi, Osaka 594-0071 (JP)
(74) Representative: Patentanwälte Leinweber & Zimmermann

(57) **Abstract**

A fuel cell system comprises a reformer for reforming a feed material to generate a reformed gas containing hydrogen, a material feed means for feeding the feed material to the reformer, a heater for heating the reformer, a fuel cell for generating a power by reacting the reformed gas supplied from the reformer with an oxidizing gas, and a temperature detector for detecting a temperature at a predetermined position in the fuel cell system, and in a first antifreezing operation mode, when the detector detects a temperature which is not higher than a threshold, the feed material heated in the reformer by the heater is caused to flow through flow passages of the reformed gas.

## Description

### BACKGROUND OF THE INVENTION

### 1. Field of the Invention

The present invention relates to a fuel cell system configured to generate a power by reacting a reformed gas containing hydrogen obtained by reforming of a feed material with an oxidizing gas.

### 2. Related Art

Fig. 6 shows a configuration of the conventional fuel cell system (Japanese Laid-Open Patent Application Publication No. 11 - 214025).

The fuel cell system comprises a fuel cell 33 that generates a power by reacting hydrogen supplied from a hydrogen supply means 31 with oxygen contained in air supplied from an air supply means 32, a water circulating means 34 that circulates water within a passage including the fuel cell 33, an output control unit 35 that controls the power output from the fuel cell 33, a temperature sensor 36 that detects ambient air temperature, and a control unit 37. The water circulating means 34 comprises a main tank 38, a water supply passage 40 that supplies water inside the main tank 38 to a hydrogen electrode 33a of the fuel cell 33 by using a pump 39, and water discharge passages 41 through which water is discharged from the hydrogen electrode 33a and the oxygen electrode 33b of the fuel cell 33 and is collected into the main tank 38.

Since the fuel cell 33 used in the conventional fuel cell system is PEFC (polymer electrolyte fuel cell), the hydrogen electrode 33a of the fuel cell 33 is required to be always humidified when the fuel cell 33 is conducting a power generation reaction. To this end, water is supplied from the main tank 38 to the hydrogen electrode 33a. Water in the oxygen electrode 33b which is generated by power generation reaction in the fuel cell 33 and excess water in the hydrogen electrode 33a are delivered through the water discharge passages 41 and are circulated between the fuel cell 33 and the main tank 38. The power generated in the fuel cell 33 is controlled by the output control unit 35 and then supplied to a power load.

Subsequently, an antifreezing operation of the conventional fuel cell system will be described.

When the temperature sensor 36 detects a temperature which is not higher than a threshold, the control unit 37 causes the hydrogen supply means 31 and the air supply means 32 to respectively supply hydrogen and air to the fuel cell 33, which generates a power. Simultaneously, the water inside the main tank 38 is supplied to the hydrogen electrode 33a, and the excess water in the hydrogen electrode 33a and the water in the oxygen electrode 33b obtained by power generation reaction in the fuel cell 33 are delivered through the water discharge passages 41 and are circulated between the fuel cell 33 and the main tank 38. In power generation reaction in the fuel cell 33, heat is also generated and serves to prevent freezing of water within the main tank 38, the water supply passage 40, and the water discharge passages 41 which are the water circulating means 34.

However, in the conventional fuel cell system, for the purpose of preventing freezing, the fuel cell needs to operate to generate a power regardless of a request from the power load, and the generated power is discarded. This results in an increased running cost. In particular, in the case of the polymer electrolyte fuel cell, since the ratio between a generated heat energy and a generated power energy in power generation operation is approximately 1 : 1, energy equal to twice or more of the minimum generated heat energy required to prevent freezing needs to be supplied to the fuel cell system. To temporarily preserve the power generated by an antifreezing operation in a storage battery. the storage battery needs to have a huge capacity, thereby leading to increased initial cost of the system.

### SUMMARY OF THE INVENTION

The present invention has been made under the circumstances. and an object of the present invention is to provide a fuel cell system that reduces a running cost or an initial cost associated with an antifreezing operation.

According to the present invention, there is provided a fuel cell system comprising: a reformer for reforming a feed material to generate a reformed gas containing hydrogen; a material feed means for feeding the feed material to the reformer; a heater for heating the reformer; a fuel cell for generating a power by reacting the reformed gas supplied from the reformer with an oxidizing gas; and a temperature detector for detecting a temperature at a predetermined position in the fuel cell system, wherein in a first antifreezing operation mode, when the detector detects a temperature which is not higher than a threshold, the feed material heated in the reformer by the heater is caused to flow through a flow passage of the reformed gas.

With this configuration, by flowing the feed material heated in the reformer through the flow passage of the reformer gas in the fuel cell system, freezing of water within the fuel cell system can be prevented with a minimum energy without conducting power generation in the fuel cell. Therefore, a running cost of the fuel cell system can be kept low.

In the fuel cell system, when the system judges that a request for power generation is made, the fuel cell may generate the power, and when the system judges that the request for power generation is not made, and the temperature detector detects the temperature which is not higher than the threshold, the system may go into the first antifreezing operation mode.

In the fuel cell system, the flow passage of the reformed gas may have a hydrogen discharge passage through which an off gas containing an excess reformed gas in power generation is discharged from the fuel cell and is introduced into the heater as a fuel, and the heated feed material may be caused to flow through the reformer, the fuel cell, the hydrogen discharge passage, and the heater, in this order. Thereby, freezing of at least the water within the hydrogen discharge passage can be prevented.

In the fuel cell system, the hydrogen discharge passage may have a hydrogen passage condenser for condensing moisture of the off gas into water and a hydrogen passage condensed water tank for reserving the condensed water, and the heated feed material may be also caused to flow into the hydrogen passage condenser and the hydrogen passage condensed water tank. Thereby, freezing of the water inside the hydrogen passage condenser and the water inside the hydrogen passage condensed water tank can be prevented.

The fuel cell system may further comprise: a discharged oxidizing gas discharge passage into which an oxidizing gas including an excess oxidizing gas in the power generation is discharged from the fuel cell; an oxidizing gas passage condenser for condensing moisture of the discharged oxidizing as into water; and an oxidizing gas passage condensed water tank for reserving the condensed water, wherein the oxidizing gas passage condensed water tank and the hydrogen passage condensed water tank may be connected to each other at a position lower than their liquid levels. With this configuration, freezing of the water inside the oxidizing gas passage condensed water tank can be prevented by transferring heat from the water inside the hydrogen passage condensed water tank to the water inside the oxidizing gas passage condensed water tank through the connecting portion.

The fuel cell system may further comprise: a water supply means for supplying the water reserved in at least one of the hydrogen passage condensed water tank and the oxidizing gas passage condensed water tank to the reformer, wherein in the first antifreezing operation mode, the reserved water may be supplied from the water supply means to the reformer. With this configuration, the water generated in the fuel cell system is effectively used and freezing of the water is prevented.

The fuel cell system may further comprise: a cooling water circulating passage through which water for cooling the fuel cell is circulated, wherein in the first antifreezing operation mode, the water may be circulated through the cooling water circulating passage. Thereby, freezing of the water within the cooling water circulating passage is prevented.

In the fuel cell system, the water being circulated through the cooling water circulating passage may be subjected to heat exchange with water inside a hot water reserve tank or water outflowing from the hot water reserve tank and returning into the hot water reserve tank through a hot water circulating passage. Thereby, the heat generated in the fuel cell in power generation is transferred through the cooling water and is reserved in the hot water reserve tank as hot water. In addition, freezing of water inside the hot water reserve tank is prevented in the state in which no power is generated.

In the fuel cell system, in the first antifreezing operation mode, the heater may be adapted to heat the reformer to a temperature at which reforming reaction does not occur, and thereby the heated feed material maybe delivered from the reformer. This easily achieves the configuration in which the heated feed material is delivered from the reformer.

The fuel cell system has one or more passages within which water resides and the temperature detector is attached to a position in the one or more passages at which temperature of the water is assumed to become lowest. With this configuration, freezing of the water residing within the fuel cell system can be suitably prevented.

In the fuel cell system, the temperature detector is attached to a position in the fuel cell system where ambient air temperature can be detected. By monitoring the ambient air temperature, freezing is reliably prevented by using one temperature detector, and cost is kept low.

According to the present invention, there is also provided a fuel cell system comprising: a fuel cell for generating a power and heat; a hot water reserve tank for reserving heat obtained by heat generation in the fuel cell as hot water; a heater for heating water reserved in the hot water reserve tank or water within a circulating passage including the hot water reserve tank with the power obtained by power generation in the fuel cell; and a temperature detector for detecting a temperature at a predetermined position in the fuel cell system, wherein when the system judges that a request for power generation is made, the fuel cell generates the power, and when the system judges that the request for power generation is not made and the temperature detector detects a temperature which is not higher than a threshold, the system goes into a second antifreezing operation mode, the fuel cell generates the power.

With this configuration, the power generated in the fuel cell is reserved in the hot water reserve tank as heat energy without discarding heat when generating the power in the fuel cell to prevent freezing. This eliminates aneed for a storage battery for temporarily preserving a power and controls an initial cost of the fuel cell system.

In the fuel cell system, the fuel cell generates the power and heat, and the fuel cell system may further comprise: a hot water reserve tank for reserving heat obtained by heat generation in the fuel cell as hot water; and a heater for heating water inside the hot water reserve tank or water within a circulating passage including the hot water reserve tank with the power obtained by power generation in the fuel cell, wherein when the system judges that a request for power generation is made, the fuel cell may generate the power, and when the system judges that the request for power generation is not made and the temperature detector detects a temperature which is not higher than a threshold, the systemmay go into a second antifreezing operation mode, and the fuel cell generates the power, and the first antifreezing operation mode or the second antifreezing operation mode may be selected by the system. Thereby, the first antifreezing operation mode in which the power is not generated or the second antifreezing operation mode in which the power is generated, is suitably selected and the running cost and the initial cost associated with the antifreezing operation can be effectively reduced.

In the fuel cell system, predicted amount of heat of hot water generated and reserved in the hot water reserve tank when an operation for power generation is conducted based on predicted amount of power generation requested per day may be compared with predicted amount of heat of hot water used per day, and when the predicted amount of heat of hot water used per day is larger than the predicted amount of heat of hot water generated and reserved in the hot water reserve tank, the system may operate in the second antifreezing operation mode until heat corresponding to difference between the predicted amount of heat of hot water used per day and the predicted amount of heat of hot water generated and reserved in the hot water reserve tank is reserved, and thereafter, the system may operate in the first antifreezing operation mode. Thereby, when heat reserved in the hot water reserve tank is insufficient, the antifreezing operation by power generation is conducted to convert all the generated energy into heat, or otherwise, the antifreezing operation is conducted with a minimum energy without conducting power generation. As a result, the running cost and initial cost associated with the antifreezing operation can be reduced more effectively.

The above and further objects and features of the invention will more fully be apparent from the following detailed description with accompanying drawings.

### BRIEF DESCRIPTION OF THE DRAWINGS

Fig. 1 is a block diagram showing a configuration of a fuel cell system according to a first embodiment of the present invention;
Fig. 2 is a flowchart schematically showing an operation of the fuel cell system in Fig. 1;
Fig. 3 is a block diagram showing a configuration of a fuel cell system according to a second embodiment of the present invention;
Fig. 4 is a block diagram showing a configuration of a fuel cell system according to a third embodiment of the present invention;
Fig. 5 is a flowchart showing a process of an antifreezing operation mode according to a modification of the third embodiment; and

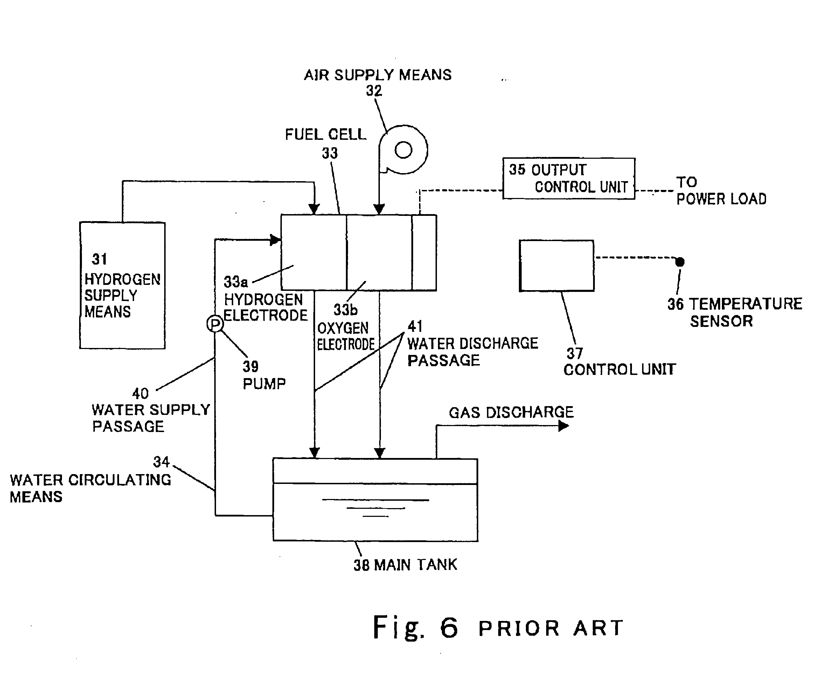

Fig. 6 is a view showing a configuration of the conventional fuel cell system.

### DETAILED DESCRIPTION OF THE PREFERRED EMBODIMENT

Hereinafter, embodiments of the present invention will be described with reference to the accompanying drawings.

### (First Embodiment)

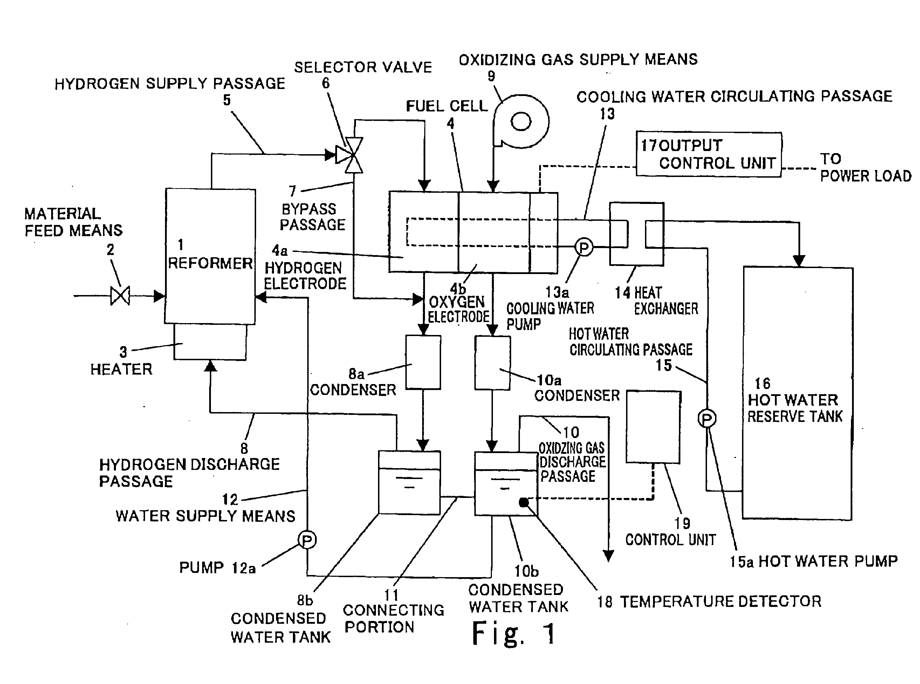

Fig. 1 is a block diagram showing a configuration of a fuel cell system according to a first embodiment of the present invention.

Referring now to Fig. 1, a reformer 1 is configured to generate a hydrogen-rich gas by reforming reaction of a feed material fed from a material feed means 2 using heat from a burner 3 as an example of a heater of the present invention. A fuel cell 4 is configured to generate a power by reacting the hydrogen-rich gas supplied from the reformer 1 with air as an example of an oxidizing gas. The fuel cell 4 has a hydrogen electrode 4a into which hydrogen flows and an oxygen electrode 4b into which the oxidizing gas flows . A hydrogen supply passage 5 connects the reformer 1 to the hydrogen electrode 4a of the fuel cell 4. In the first embodiment, the hydrogen supply passage 5 branches into a supply passage leading to the fuel cell 4 and a bypass passage 7 leading to a hydrogen passage condenser 8a, and a selector valve 6 is adapted to suitably select destination of the hydrogen flowing through the hydrogen supply passage 5 between the fuel cell 4 and the hydrogen passage condenser 8a.

A hydrogen discharge passage 8 connects the hydrogen electrode 4a of the fuel cell 4 to the burner 3. The hydrogen discharge passage 8 is provided with the hydrogen passage condenser 8a and a hydrogen passage condensed water tank (hereinafter simply referred to as a condensed water tank) 8b.

An oxidizing gas supply means 9 for supplying an oxidizing gas and an oxidizing gas discharge passage 10 for discharging an excess oxidizing gas are connected to the oxygen electrode 4b of the fuel cell 4. The oxidizing gas discharge passage 10 is provided with an oxidizing gas passage condenser 10a and an oxidizing gas passage condensed water tank (hereinafter simply referred to as a condensed water tank)10b. The condensed water tank 10a communicates with the condensed water tank 8a through a connecting portion 11 at a position lower than their liquid levels. This prevents mixing between the oxidizing gas and the hydrogen gas.

A water supply means 12 is configured to supply water required for reforming reaction to the reformer 1. The water supply means 12 is configured to draw water from at least one of the condensed water tank 8b and the condensed water tank 10b by using a reforming water pump 12a. In the first embodiment, the water is drawn from the condensed water tank 10b.

A cooling water circulating passage 13 serves to cool heat derived from the fuel cell 4. Through the cooling water circulating passage 13, cooling water is circulated between the fuel cell 4 and a heat exchanger 14 by using a cooling water pump 13a.

Heat derived from the fuel cell 4 is transferred through the heat exchanger 14 in the cooling water circulating passage 13 and through a hot water circulating passage 15 and is reserved in a hot water reserve tank 16. Through the circulating passage 15, hot water is circulated between the heat exchanger 14 and the hot water reserve tank 16 by using a hot water pump 15a.

An output control unit 17 serves to control and supply a power generated in the fuel cell 4 to a power load such as home. A temperature detector 18 comprised of a sensor or the like is provided at any suitable location inside or outside of the fuel cell system, where temperature can be appropriately detected to prevent freezing of water within various passages in the fuel cell system. In order to reliably detect beginning of freezing, the temperature detector 18 is preferably provided at a location where temperature of water residing in the passages is assumed to become lowest. In the first embodiment, the temperature detector 18 is attached to a position where a temperature of the water inside the condensed water tank 10b can be detected.

An operation of the entire fuel cell system is controlled by a control unit 19 comprised of a computer. The control unit 19 is provided with an operation portion (not shown) for entering an instruction such as an ON/OFF of the system. In accordance with the instruction entered with the operation portion, the control unit 19 is configured to control the fuel cell system.

Subsequently, an operation of the fuel cell system according to the first embodiment so configured will be described.

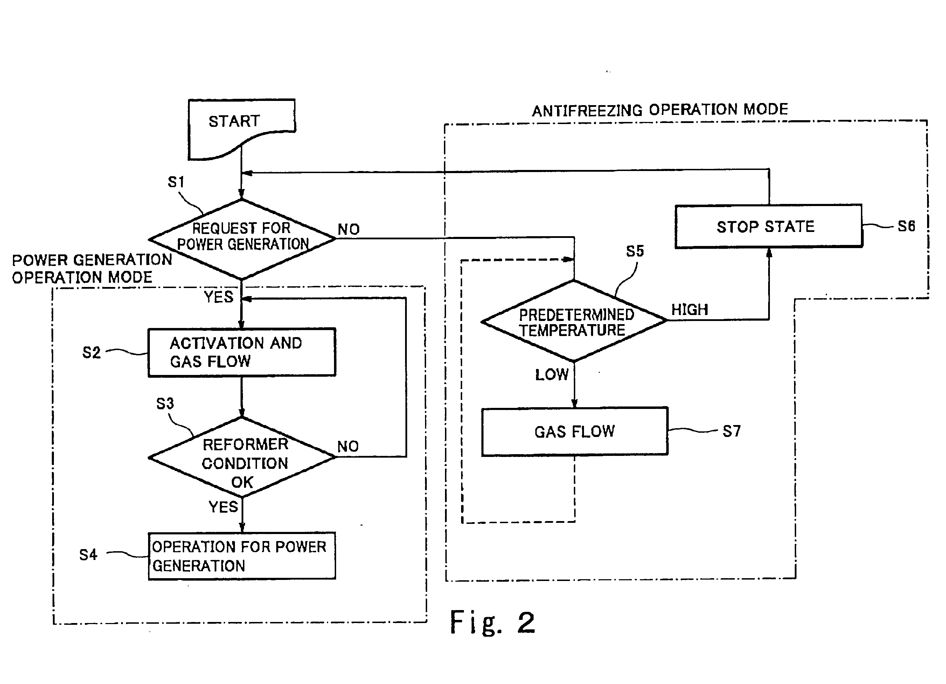

Fig. 2 is a flowchart schematically showing an operation of the fuel cell system in Fig. 1. Since the operation of the fuel cell system is controlled according to a control program of the control unit 19, a control process of the control unit 19 will be described as the operation of the fuel cell system.

Referring now to Figs. 1 and 2, the fuel cell system has a power generation mode for normally generating a power and an antifreezing operation mode (hereinafter referred to as a first antifreezing operation mode) for preventing freezing. Upon an ON-instruction of the system being entered with the operation portion (not shown), the fuel cell system starts, and first of all, judges whether or not there is a request for power generation (Step 1). Here, it is judged that the request for power generation is made from an event that a value for the power load is larger than a predetermined value. Conversely, when the value is not larger than the predetermined value, it is judged that the request for power generation is not made. Alternatively, an instruction for power generation may be entered with the operation portion (not shown), and based on whether or not there is an entering operation, it is judged whether or not the request for the power generation is made.

First, an event that the request for power generation is made will be described.

In this case, the fuel cell system goes into the power generation operation mode, in which the fuel cell system is activated and gas flow is conducted (Step S2).

Specifically, the selector valve 6 selects the bypass passage 7. In this state, a feed material such as hydrocarbon, including methane, utility gas, propane, etc, or a liquid fuel capable of being evaporated by heating in the reformer 1 (an alcohol fuel with a low boiling point such as ethanol, or methanol) is fed from the material feed means 2 to the reformer 1. The feed material in the reformer 1 is heated by the burner 3 and is converted into a hydrogen-rich reformed gas through reforming reaction with water. Nonetheless, at the start of the system, since the temperature of the reformer 1 is low and thereby the hydrogen-rich gas is not sufficiently generated, the reformed gas delivered from the reformer 1 contains more feed material (gas) and less hydrogen. The reformed gas flows through the bypass passage 7 and the hydrogen discharge passage 8 and is used as the fuel gas in the burner 3. A temperature at a predetermined position of the reformer 1 (e.g., reaction portion) is monitored (Step S3). When a predetermined time elapses after the temperature reaches a predetermined value (e.g., temperature at which reforming reaction can occur), the selector valve 6 switches the bypass passage 7 to the passage leading to the fuel cell 4, and the operation for power generation is started (Step S4). Alternatively, a starting state of the reformer 1 may be judged by monitoring a concentration of hydrogen contained in the reformed gas.

Meanwhile, air is supplied from the oxidizing gas supply means 9 to the oxygen electrode 4b of the fuel cell 4 as the oxidizing gas. Inside the fuel cell 4, the hydrogen supplied to the hydrogen electrode 4a reacts with oxygen contained in the air supplied to the oxygen electrode 4b, thereby generating a power. Most of the hydrogen is used for reaction at the hydrogen electrode 4a of the fuel cell 4, and hydrogen remaining unused (off -gas) is discharged into the hydrogen discharge passage 8. The moisture of discharged hydrogen is condensed into water in the hydrogen passage condenser 8a and the resulting condensed water is separated from the discharged hydrogen in the condensed water tank 8b. After separated, the discharged hydrogen is supplied to the burner 3 to be used as a heating fuel for reforming reaction.

At the oxygen electrode 4b of the fuel cell 4, the hydrogen and the oxygen contained in air are reacted with each other and converted into water, which is converted into steam, which is then discharged together with air into the oxidizing gas discharge passage 10. The moisture of the air containing steam is condensed into water in the oxidizing gas passage condenser 10a, and the resulting condensed water is separated from the air in the condensed water tank 10b. The water which has been collected into the condensed water tank 10b and the condensed water tank 8b, is supplied into the reformer 1 by using the reforming water pump 12a to be used for reforming reaction.

The power generated in the fuel cell 4 is controlled by the output control unit 17, and supplied to the power load such as home. Meanwhile, the heat generated through the power generation in the fuel cell 4 is transferred to the heat exchanger 14 by circulating the water within the cooling water circulating passage 13 by using the cooling water pump 13a, for heat exchange with the water within the hot water circulating passage 15. The heat after heat exchange is delivered to the hot water reserve tank 16 by water circulation by the hot water pump 15a and is reserved therein as hot water. The hot water is supplied for various applications such as water feeding or heating at home. Thus, the heat derived from the fuel cell 4 is effectively used. The heat exchanger 14 may be provided within the hot water reserve tank 16.

Subsequently, an event that the request for power generation is not made, will be described.

In this state, the fuel cell system goes into the first antifreezing operation mode, in which the temperature at the predetermined position is monitored (Step S5). When the temperature is higher than a predetermined temperature, the fuel cell system maintain a stop state (Step S6), whereas when the temperature is not higher than the predetermined temperature, the gas flow is conducted (Step S7).

Specifically, when the request for power generation is not made and the temperature detector 18 detects a temperature higher than a threshold (at which freezing can be prevented by the antifreezing operation), for example, 0°C, the fuel cell system maintains the stop state (Step S6). On the other hand, when the temperature detector 18 detects a temperature which is not higher than the threshold, the selector valve 6 selects the fuel cell 4, so that the feed material sequentially flows from the material feed means 2 to the reformer 1, the hydrogen supply passage 5, the fuel cell 4, the hydrogen passage condenser 8a of the hydrogen discharge passage 8, the condensed water tank 8b, and the burner 3, where the feed material is combusted (Step S7). At this time, the water is supplied from the water supply means 12 to the reformer 1, where the reaction portion is kept at a temperature required for reaction or lower by adjusting combustion of the burner 3. In general, reaction requires a temperature of about 400°C or higher, but in this case, the temperature is kept at about 300°C. For this reason, the feed material is not reformed in the reformer 1, and the feed material heated to this temperature is delivered from the reformer 1. Meanwhile, the oxidizing gas supply means 9 is in a stop state, and therefore air is not supplied to the oxygen electrode 4a. Under the condition, the fuel cell 4 does not generate a power.

As a result, the feed material heated in the reformer 1 by the burner 3 sequentially flows through the hydrogen supply passage 5, the fuel cell 4, the hydrogen passage condenser 8a of the hydrogen discharge passage 8, the condensed water tank 8b, and the burner 3, in this order within the fuel cell system, thereby preventing freezing of the water residing within the passages and the water inside the condensed water tank 8b.

In addition, since the condensed water tank 8b communicates with the condensed water tank 10b through the connecting portion 11 at the position lower than their liquid levels, in the first antifreezing operation mode, heat transfer from the water inside the tank 8b prevents freezing of the water inside the tank 10b.

Further, the reforming water pump 12a pumps the water inside the condensed water tank 10b into the reformer 1, thereby preventing freezing of water within the water supply means 12.

Moreover, since the fuel cell 4 is heated in the first antifreezing operation mode, freezing of the water within the cooling water circulating passage 13 is prevented by operating the cooling water pump 13a to circulate the water, and freezing of the water inside the hot water reserve tank 16 is prevented by transferring heat to the hot water circulating passage 15 by the heat exchanger 14.

As should be appreciated, in the first antifreezing operation mode, freezing of the water within the passages can be prevented with minimum energy (corresponding to consumption of the feed material in this embodiment) without conducting power generation in the fuel cell 4, and thereby running cost of the system can be kelp low.

While the oxidizing gas supply means 9 is stopped and no power is generated in the first antifreezing operation mode, a little power may be generated. In that case, the fuel cell system may be operated as in the power generation operation mode except that the feed material is partially reformed (so that concentration of hydrogen becomes lower than that of hydrogen in the power generation operation mode) in the reformer 1.

### (Second Embodiment)

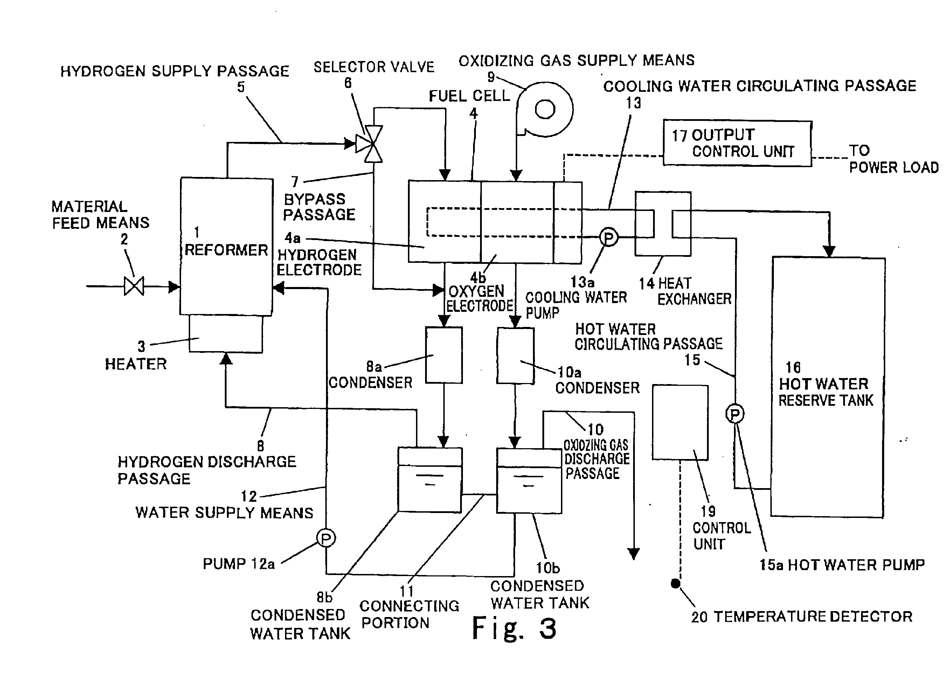

Fig. 3 is a block diagram showing a configuration of a fuel cell system according to a second embodiment of the present invention. In Fig. 3, the same reference numerals as those in Fig. 1 denote the same or corresponding parts, which will not be further described. The configuration of the second embodiment is identical to that of the first embodiment except that a temperature detector 20 is attached to a position where anbient air temperature can be detected.

As mentioned previously in the first embodiment, in order to prevent freezing of the water within the passages, it is desirable to detect the temperature of the position where water temperature is assumed to become lowest. But, the position varies depending on conditions, and in that case, a plurality of temperature detector 20 need to be provided. Accordingly, by detecting anbient air temperature by using one temperature detector 20, freezing can be reliably prevented. Consequently, cost of the temperature detector can be kept low.

### (Third Embodiment)

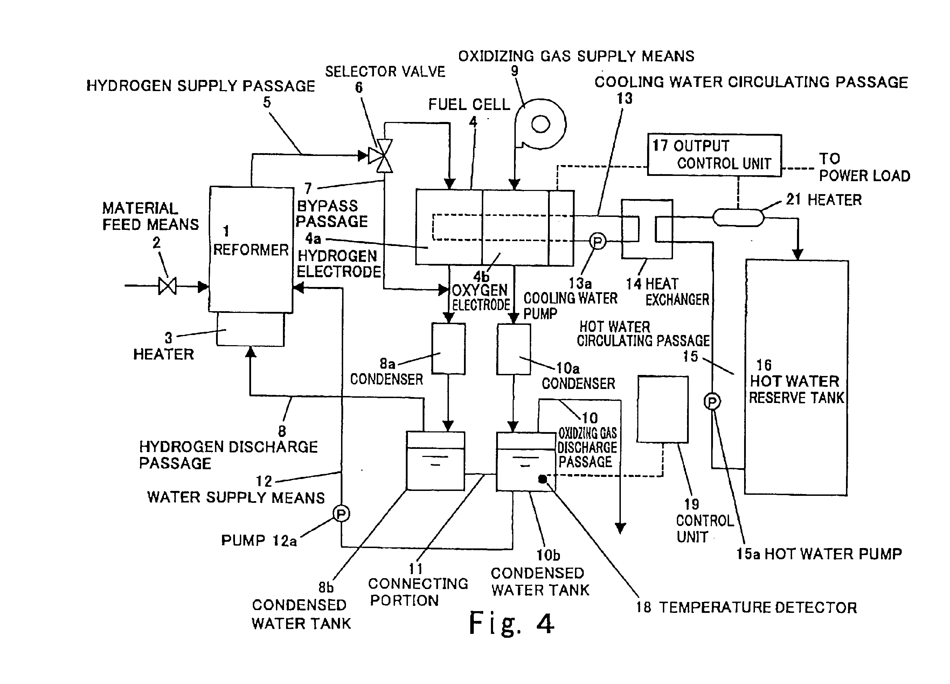

Fig. 4 is a block diagram showing a configuration of a fuel cell system according to a third embodiment of the present invention. In Fig. 4, the same reference numerals as those in Fig. 1 denote the same or corresponding parts, which will not be further described. The configuration of the third embodiment is identical to that of the first embodiment except that a heater 21 electrically connected to the output control unit 17 is provided in the hot water circulating passage 15 in the fuel cell system, and the fuel cell system has a second antifreezing operation mode.

Subsequently, an operation of the second antifreezing operation mode will be described.

When the request for power generation in the fuel cell 4 is not made and the temperature detector 18 detects a temperature which is not higher than a threshold (at which freezing can be prevented by the antifreezing operation), for example, 0°C, the fuel cell system goes into the second antifreezing operation mode. In this mode, the feed material is fed from the material feed means 2 to the reformer 1 and air is supplied from the oxidizing gas supply means 9 to the fuel cell 4. In the fuel cell 4, the power is generated in such a manner that the reformed gas generated in the reformer 1 reacts with the air as the oxidizing gas. The heat resulting from this power generation not only warms an inside of the passages such as the hydrogen discharge passage 8, or the oxidizing gas discharge passage 10, but also is transferred into the hot water reserve tank 16 through the heat exchanger 14 in the cooling water circulating passage 13 and the hot water circulating passage 15. The heat is reserved in the hot water reserve tank 16 as the hot water. An excess power in the fuel cell 4 is controlled by the output control unit 17 to energize the heater 21.

In the second antifreezing operation mode, the fuel cell 4 generates a power and the generated power is reserved in the hot water reserve tank 16 as heat energy without discarding heat. This eliminates a need for a storage battery that temporarily preserves a power, and consequently, initial cost of the system can be kept low. It should be appreciated that the same effects are obtained by providing the heater 21 inside the hot water reserve tank 16.

Subsequently, a modification of the antifreezing operation mode of the third embodiment will be described. In this modification, the control unit 19 is configured to control the fuel cell system so that the second antifreezing operation mode or the first antifreezing operation mode is suitably selected. In this configuration, the running cost and initial cost associated with the antifreezing operation can be reduced more effectively.

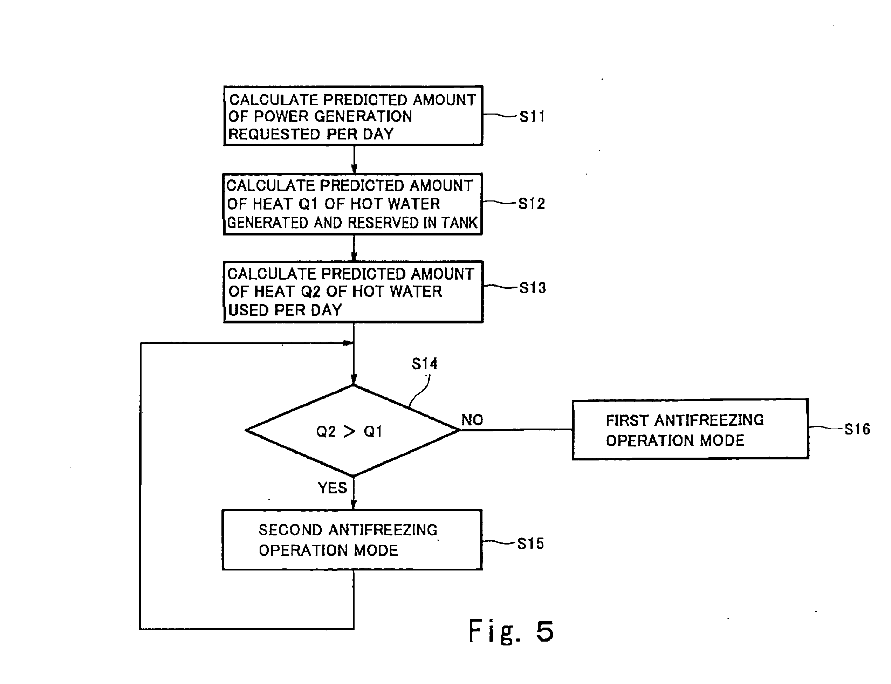

Fig. 5 is a flowchart showing a process of an antifreezing operation mode according to a modification of the third embodiment.

Referring to Fig. 5, in this modification, in response to a request for power generation, the fuel cell 4 operates for power generation. And, the control unit 19 executes control as described below.

First of all, the control unit 19 calculates predicted amount of power generation requested per day (Step S11).

Then, the control unit 19 calculates predicted amount of heat Q1 of hot water generated and reserved in the hot water reserve tank 16, when the operation for power generation is conducted based on the predicted amount of power generation requested per day (Step S12).

Then, the control unit 19 calculates predicted amount of heat Q2 of hot water used per day (Step S13).

Then, the control unit 19 compares the predicted amount of heat Q2 to the predicted amount of heat Q1 (Step S14).

When the predicted amount of heat Q2 is larger than the predicted amount of heat Q1 and the temperature detector 18 detects a temperature which is not higher than the threshold, the fuel cell system operates in the second antifreezing mode until heat corresponding to difference (Q2 - Q1)is reserved (Step S15, 14) and thereafter, the fuel cell system operates in the first antifreezing operation mode (Step S16).

In accordance with this modification, when the heat reserved in the hot water reserve tank 16 is insufficient, the antifreezing operation by power generation is conducted and all the generated energy is converted into heat, or otherwise, the antifreezing operation is conducted with a minimum energy without power generation. As a result, the running cost and the initial cost associated with the antifreezing operation can be reduced more effectively.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention and all modifications which come within the scope of the appended claims are reserved.

## Claims

1. A fuel cell system comprising:
a reformer for reforming a feed material to generate a reformed gas containing hydrogen;
a material feed means for feeding the feed material to the reformer;
a heater for heating the reformer;
a fuel cell for generating a power by reacting the reformed gas supplied from the reformer with an oxidizing gas; and
a temperature detector for detecting a temperature at a predetermined position in the fuel cell system, wherein
in a first antifreezing operation mode, when the detector detects a temperature which is not higher than a threshold, the feed material heated in the reformer by the heater is caused to flow through a flow passage of the reformed gas.

2. The fuel cell system according to Claim 1, wherein
when the system judges that a request for power generation is made, the fuel cell generates the power, and
when the system judges that the request for power generation is not made and the temperature detector detects the temperature which is not higher than the threshold, the system goes into the first antifreezing operation mode.

3. The fuel cell system according to Claim 1, wherein the flow passage of the reformed gas has a hydrogen discharge passage through which an off gas containing an excess reformed gas in power generation is discharged from the fuel cell and is introduced into the heater as a fuel, and the heated feed material is caused to flow through the reformer, the fuel cell, the hydrogen discharge passage, and the heater, in this order.

4. The fuel cell system according to Claim 3, wherein the hydrogen discharge passage has a hydrogen passage condenser for condensing moisture of the off gas into water and a hydrogen passage condensed water tank for reserving the condensed water, and the heated feed material is also caused to flow into the hydrogen passage condenser and the hydrogen passage condensed water tank.

5. The fuel cell system according to Claim 4, further comprising:
an oxidizing gas discharge passage into which a discharged oxidizing gas including an excess oxidizing gas in the power generation is discharged from the fuel cell;
an oxidizing gas passage condenser for condensing moisture of the discharged oxidizing gas into water; and
an oxidizing gas passage condensed water tank for reserving the condensed water, wherein
the oxidizing gas passage condensed water tank and the hydrogen passage condensed water tank are connected to each other at a position lower than their liquid levels.

6. The fuel cell system according to Claim 5, further comprising:
a water supply means for supplying the water reserved in at least one of the hydrogen passage condensed water tank and the oxidizing gas passage condensed water tank to the reformer, wherein
in the first antifreezing operation mode, the reserved water is supplied from the water supply means to the reformer.

7. The fuel cell system according to Claim 1, further comprising:
a cooling water circulating passage through which water for cooling the fuel cell is circulated, wherein
in the first antifreezing operation mode, the water is circulated through the cooling water circulating passage.

8. The fuel cell system according to Claim 7, wherein the water being circulated through the cooling water circulating passage is subjected to heat exchange with water inside a hot water reserve tank or water outflowing from the hot water reserve tank and returning into the hot water reserve tank through a hot water circulating passage.

9. The fuel cell system according to Claim 1, wherein
in the first antifreezing operation mode, the heater is adapted to heat the reformer to a temperature at which reforming reaction does not occur, and thereby the heated feed material is delivered from the reformer.

10. The fuel cell system according to Claim 1, wherein
the fuel cell system has one or more passages within which water resides and the temperature detector is attached to a position in the one or more passages at which temperature of the water is assumed to become lowest.

11. The fuel cell system according to Claim 1, wherein the temperature detector is attached to a position in the fuel cell system where ambient air temperature can be detected.

12. A fuel cell system comprising:
a fuel cell for generating a power and heat;
a hot water reserve tank for reserving heat obtained by heat generation in the fuel cell as hot water;
a heater for heating water reserved in the hot water reserve tank or water within a circulating passage including the hot water reserve tank with the power obtained by power generation in the fuel cell; and
a temperature detector for detecting a temperature at a predetermined position in the fuel cell system, wherein
when the system judges that a request for power generation is made, the fuel cell generates the power, and
when the system judges that the request for power generation is not made and the temperature detector detects a temperature which is not higher than a threshold, the system goes into a second antifreezing operation mode, and the fuel cell generates the power.

13. The fuel cell system according to Claim 1, wherein the fuel cell generates the power and heat, the fuel cell system further comprising:
a hot water reserve tank for reserving heat obtained by heat generation in the fuel cell as hot water; and
a heater for heating water inside the hot water reserve tank or water within a circulating passage including the hot water reserve tank with the power obtained by power generation in the fuel cell , wherein
when the system judges that a request for power generation is made, the fuel cell generates the power,
when the system judges that the request for power generation is not made and the temperature detector detects a temperature which is not higher than a threshold, the system goes into a second antifreezing operation mode and the fuel cell generates the power, and
the first antifreezing operation mode or the second antifreezing operation mode is selected by the system.

14. The fuel cell system according to Claim 13, wherein
predicted amount of heat of hot water generated and reserved in the hot water reserve tank when an operation for power generation is conducted based on predicted amount of power generation requested per day is compared with predicted amount of heat of hot water used per day, and when the predicted amount of heat of hot water used per day is larger than the predicted amount of heat of hot water generated and reserved in the hot water reserve tank, the system operates in the second antifreezing operation mode until heat corresponding to difference between the predicted amount of heat of hot water used per day and the predicted amount of heat of hot water generated and reserved in the hot water reserve tank is reserved, and thereafter, the system operates in the first antifreezing operation mode.
